# EUROPÄISCHE PATENTSCHRIFT

(11) **EP 2 357 112 B1**
(45) Veröffentlichungstag und Bekanntmachung des Hinweises auf die Patenterteilung: **10.07.2013**
(21) Anmeldenummer: 10195554.0
(22) Anmeldetag: 17.12.2010
(51) Int. Cl.: B60T 7/12, B60T 13/74, B60T 8/24, B60T 8/26, B60T 8/32

(54) **Verfahren zum Ansteuern zumindest einer Parkbremseinrichtung**
Method for controlling at least one parking brake device
Procédé de commande d'au moins un dispositif de freinage de stationnement

(30) Priorität: 02.02.2010 DE 102010001492
(43) Veröffentlichungstag der Anmeldung: 17.08.2011
(73) Patentinhaber: ZF Friedrichshafen AG, 88038 Friedrichshafen (DE)
(72) Erfinder: Prebeck, Stefan, 94034, Passau (DE); Langner, Dominik, 94559, Niederwinkling (DE); Sagmeister, Martin, 94036, Passau (DE)

(56) Entgegenhaltungen:
- EP-A1- 1 145 927
- EP-A1- 1 630 055
- DE-A1-102004 055 960
- DE-A1-102005 034 522

## Beschreibung

Die vorliegende Erfindung betrifft ein Verfahren zum Ansteuern einer elektronisch gesteuerten Parkbremseinrichtung bei einem Fahrzeug, insbesondere bei einem Nutzfahrzeug.

Beispielsweise aus der Druckschrift DE 697 29 173 T2 ist ein Bremssteuerungssystem für landwirtschaftliche Traktoren bekannt, wobei jedem Rad eine Bremse zugeordnet ist und die Stellglieder der Radbremsen über eine Hydraulikeinheit betätigt werden. Die Hydraulikeinheit wird über eine elektronische Steuereinheit angesteuert. Dadurch kann die Bremsleistung mit dem elektronischen Bremssteuerungssystem auf die Achsen des Traktors verteilt werden, so dass die Räder des Traktors beim Bremsen nicht gleichzeitig blockieren. Ferner kann das bekannte Bremssteuerungssystem den Wenderadius der Traktoren minimieren, indem bei maximal möglichem Lenkwinkel die Bremse des inneren Hinterrades über die Hydraulikeinheit betätigt wird.

Die DE 10 2004 055 960 A1 offenbart ein Verfahren zum Ansteuern einer Parkbremseinrichtung, bei welchem die Parkbremseinrichtung in Abhängigkeit von Getriebeparametern in vorbestimmten Betriebszuständen des Fahrzeugs unterstützend eingesetzt wird.

Der vorliegenden Erfindung liegt die Aufgabe zu Grunde, ein Verfahren der eingangs beschriebenen Gattung vorzuschlagen, mit dem der Betrieb eines Fahrzeuges, insbesondere eines Nutzfahrzeuges, weiter optimiert und komfortabler wird.

Diese Aufgabe wird erfindungsgemäß durch die Merkmale des Patentanspruches 1 gelöst, wobei sich weitere vorteilhafte Ausgestaltungen aus den Unteransprüchen ergeben.

Demnach wird ein Verfahren zum Ansteuern zumindest einer elektronisch gesteuerten Parkbremseinrichtung oder dergleichen bei einem Fahrzeug vorgeschlagen, wobei die Parkbremseinrichtung in Abhängigkeit von Motor- und/oder Getriebeparametern in vorbestimmten Betriebszuständen des Fahrzeuges unterstützend eingesetzt wird. Auf diese Weise wird der Betrieb des Fahrzeuges erheblich erweitert und komfortabler, da die elektronische Parkbremse neben ihrer normalen Brems bzw. Parkfunktion zusätzlich bestimmte zum Beispiel vom Fahrer gewünschte Betriebsweisen unterstützt und dadurch z. B. auch bei einer Fehlfunktion der Getriebe-oder Motorsteuerung kritische Fahrzustände verhindert.

Vorzugsweise kann als elektronische Parkbremseinrichtung zumindest eine bereits im Fahrzeug vorhandene elektronische Parkbremse oder dergleichen verwendet werden, die beispielsweise den Rädern der Hinter- und oder auch der Vorderachse zugeordnet ist. Die Parkbremse kann z. B. elektrisch über einen Elektromotor betätigt und z. B. zusätzlich über ein Steuergerät im Rahmen des erfindungsgemäßen Verfahrens elektronisch angesteuert werden. Durch das vorgeschlagene Verfahren wird dadurch die Nutzungsmöglichkeit der vorhandenen Parkbremse bzw. Parkbremsen deutlich erweitert.

Die elektronische Parkbremseinrichtung kann sowohl bei Kraftfahrzeugen, wie z. B bei Kommunal- und Transportfahrzeugen oder dergleichen, als auch bei Arbeitsmaschinen, wie z. B. Ackerschleppern und Baumaschinen oder dergleichen eingesetzt werden, um die Parksperrenfunktion zu realisieren, wobei die Parkbremseinrichtung mit dem Bremslicht des Fahrzeuges gekoppelt wird, so dass der nachfolgende Verkehr auch bei einem aktiven Bremseingriff durch die Aktivierung des Bremslichtes auf die Verzögerung des Fahrzeuges hingewiesen wird.

Bei Lastschaltgetrieben ist oftmals der offene Antriebsstrang als sicherer Zustand im Fehlerfall definiert, so dass im Fehlerfall des Fahrzeuges eine Neutralschaltung erfolgt. Auch bei CVT-Getrieben mit Leistungsverzweigung wird der Antriebsstrang geöffnet, wenn z. B. bestimmte Schlüsselkomponenten ausgefallen sind, so dass der Fahrer selbst das Fahrzeug mit der Fahrzeugbremse zum Stillstand bringen muss und das Getriebe nicht gegen den Motor arbeitet. Wenn dieser Fehlerfall während einer Bergfahrt oder Talfahrt des Fahrzeuges auftritt und der Antriebsstrang unerwartet geöffnet wird, kann im Rahmen des erfindungsgemäßen Verfahrens vorgesehen sein, dass die elektronische Parkbremseinrichtung aktiviert wird, wenn dieser Betriebszustand in Abhängigkeit von Getriebeparametern erkannt wird. Dadurch wird eine zusätzliche Bremsleistung durch die angesteuerte Parkbremseinrichtung aufgebracht und somit werden sicherheitskritische Betriebszuständen verhindert.

Vorzugsweise kann gemäß einer Weiterbildung der Erfindung in diesem Zusammenhang vorgesehen sein, dass beispielsweise die Ansteuerung der Parkbremseinrichtung in Form einer vorbestimmten Rampenfunktion oder dergleichen erfolgt, um dadurch ein Blockieren der Räder zu verhindern.

Eine weitere mögliche Unterstützung durch die elektronische Parkbremseinrichtung kann auch zum so genannten Einfangen des Fahrzeuges im Betriebszustand des so genannten Polizeiganges erfolgen. Als Polizeigang wird der Betriebszustand bezeichnet, bei dem der Fahrer bei einer Bergabfahrt absichtlich durch Betätigen der Fahrkupplung den Antriebsstrang öffnet, um höhere Fahrgeschwindigkeiten zu erreichen, als die maximal für das Fahrzeug zulässige Geschwindigkeit. Insbesondere bei Getrieben mit zum Beispiel automatisch angesteuerten nassen Lamellenkupplungen kann ein Schließen der Kupplung zum Wiedereinkuppeln verhindert werden, wenn die Relativgeschwindigkeit an den Lamellen der Reibkupplung einen vorbestimmten Grenzwert überschreitet, um ein Verbrennen der Kupplungsbeläge zu vermeiden. In diesem Zustand kann die elektronische Parkbremseinrichtung zum Reduzieren der Relativgeschwindigkeit aktiviert werden, wenn ein Erreichen einer unzulässigen Relativgeschwindigkeit z. B. anhand von Motor- oder Getriebeparametern erkannt wird. Diese erfindungsgemäße Verfahrensweise kann auch bei Getrieben mit Klauenkupplungen eingesetzt werden, um auch dort die Synchrondrehzahl möglichst zügig zu erreichen. Zudem ist diese Verfahrensweise auch bei Lastschaltgetrieben im Rahmen von Rückschaltungen einsetzbar, wenn kritische Relativgeschwindigkeiten an den Lastschaltkupplungen vorliegen.

Ein weiterer Anwendungsbereich der erfindungsgemäßen Verfahrensweise liegt bei einer Vorbereitung eines Bremsvorganges für das Fahrzeug. Insbesondere bei Lamellenbremsen wird zu Beginn des Bremsvorganges beim Betätigen des Bremspedals lediglich das Lüftspiel zwischen den Lamellen aufgehoben. Eine Bremswirkung tritt dabei noch nicht ein, so dass der Bremsvorgang verzögert wird. Die elektronische Parkbremseinrichtung kann zum Reduzieren oder Aufheben des Lüftspiels zwischen den Lamellen aktiviert werden, wenn ein vorbestimmter negativer Gradient im Verlauf der Betätigungsbewegung des Fahrpedals erkannt wird. Wenn beispielsweise ermittelt wird, dass der Fahrer die Betätigung des Fahrpedals zügig beendet und auf das Bremspedal wechselt, kann die elektronische Parkbremseinrichtung aktiviert werden, um dem Fahrer dadurch eine schnellere Bremsung des Fahrzeuges zu ermöglichen.

Im Rahmen einer nächsten Weiterbildung der Erfindung kann die Aktivierung der elektronischen Parkbremseinrichtung auch zum Verstärken der Bremsfunktion des Fahrzeuges vorzugsweise auch mit einer so genannten ABS-Funktion verwendet werden. Wenn bei einem entsprechenden, z.B. positiven Gradienten im Verlauf der Betätigungsbewegung des Bremspedals und/oder bei einem entsprechenden Gradienten im Bremsdruckverlauf eine Notbremsung des Fahrzeuges erkannt beziehungsweise identifiziert wird, so dass die elektronische Parkbremseinrichtung die registrierte Notbremsung verstärken beziehungsweise beschleunigen kann. Mithilfe der elektronischen Parkbremseinrichtung kann dadurch der Fahrer durch überlagertes Ansteuern im Rahmen der Notbremsung unterstützt werden. Durch die daraus resultierenden niedrigeren erforderlichen Kräfte am Bremspedal erhöht sich auch der Fahrkomfort für den Fahrer.

Wenn in diesem Zusammenhang auch die Raddrehzahlen überwacht werden, kann die zusätzliche Bremswirkung der elektronischen Parkbremseinrichtung reduziert werden, sobald die Gefahr der Blockade eines Rades erkannt wird. Dadurch kann auch eine ABS-Funktion bei der erfindungsgemäßen Verfahrensweise realisiert werden und somit eine Überbremsung der Räder sicher verhindert werden.

Um ein Erreichen von Überdrehzahlen im Schubbetrieb bei dem Motor oder dem Getriebe zu verhindern, kann bei dem erfindungsgemäßen Verfahren vorgesehen sein, dass die elektronische Parkbremseinrichtung aktiviert wird, wenn im Schubbetrieb ein Überschreiten einer vorbestimmten Drehzahlgrenze erfasst wird. Beispielsweise sind Getriebesysteme bekannt, die durch Eingriff auf die Getriebeübersetzung die Bremswirkung des Motors soweit erhöhen, dass im Schubbetrieb die Fahrgeschwindigkeit konstant gehalten werden kann. Diese Systeme überwachen auch die Motordrehzahl, um bei einer steilen Geländefahrt mit dem Fahrzeug durch Einstellen einer entsprechenden Getriebeübersetzung ein Überdrehen des Motors zu verhindern. Falls beim Überschreiten der Drehzahlgrenze von Motor und Getriebe der Fahrer nicht reagiert, kann es zu mechanischen Schäden im Antriebsstrang kommen. Diese können mithilfe der elektronischen Parkbremseinrichtung durch automatisches Abbremsen verhindert werden. Hierbei kann im Rahmen des erfindungsgemäßen Verfahrens vorgesehen sein, dass in regelmäßigen Abständen oder bei Erreichen einer maximalen errechneten Bremsleistung die elektronische Parkbremseinrichtung gelüftet wird, um eine thermische Überlastung zu verhindern.

Mit der vorbeschriebenen erfindungsgemäßen Verfahrensweise kann auch das Einhalten einer Tempomat-Geschwindigkeit im Schubbetrieb bei starkem Gefälle bzw. einer Talfahrt sichergestellt bzw. unterstützt werden. Insbesondere bei hydrostatischen mechanischen leistungsverzweigten CVT-Getrieben kann durch die erfindungsgemäße Verfahrensweise ein überhöhtes Druckniveau des Hydrostats verhindert werden, indem die elektronische Parkbremseinrichtung das Fahrzeug entsprechend abbremst.

Darüber hinaus kann mit dem erfindungsgemäßen Verfahren die Ausrollcharakteristik eines Fahrzeuges in vorteilhafter Weise verändert werden. Beispielsweise bei CVT-Getrieben ist es bekannt, dass über ein Aggressivitätspotentiometer die Charakteristik des Ausrollens, zum Beispiel wenn der Fahrer vom Fahrpedal geht, beeinflusst und individuell dem Fahrerwunsch oder dem Einsatzgebiet angepasst werden kann. Diese Funktion ist mithilfe der elektronischen Bremseinrichtung ebenfalls bei allen anderen Getriebearten mit dem erfindungsgemäßen Verfahren realisierbar, in dem durch die Aktivierung der elektronischen Bremseinrichtung die Charakteristik des Ausrollens des Fahrzeuges je nach Bedarf verändert wird. Gegebenenfalls kann das Fahrzeug auch durch die elektronische Parkbremseinrichtung zum Stillstand gebracht werden.

Gemäß einer nächsten Ausgestaltung der Erfindung kann mit dem erfindungsgemäßen Verfahren eine Verbesserung der Dynamik beim Verzögern des Fahrzeuges durch Rückschalten realisiert werden. Es sind Systeme bekannt, bei denen durch Betätigen eines Bedienelements eine Übersetzungsverstellung im Getriebe erreicht wird, um im Schubbetrieb eine höhere Motorbremswirkung zu erzielen. Je nach Fahrsituation kann es durch die Trägheit des Systems zu Verzögerungen bei der gewünschten Bremswirkung kommen, welches sich komfortmindernd auswirkt. Durch die Ansteuerung der elektronischen Bremseinrichtung kann eine Totzeit bei der Übersetzungsverstellung aufgrund der Trägheit des Getriebes überbrückt werden, so dass der Fahrer ohne zeitliche Verzögerung die gewünschte Verzögerung erfährt. Dies erhöht den Fahrkomfort.

Im Rahmen der vorliegenden Erfindung kann auch ein so genanntes automatisches Lenkbremsen unterstützt werden. Hierbei wird bei dem Getriebe über das ABS-System in Abhängigkeit des Signals eines Lenkwinkel-Sensors eine automatische Lenkbremsung durchgeführt. Diese Funktonalität kann mit dem erfindungsgemäßen Verfahren durch die Ansteuerung z. B. zweier unabhängiger elektronischer Parkbremsen oder dergleichen realisiert werden, die jeweils z. B. einem Rad des Fahrzeuges zugeordnet sind. Insbesondere, wenn durch das Auswerten von Raddrehzahlunterschieden ein vorbestimmter Lenkeinschlag erfasst wird, kann die automatische Lenkbremsung durch das erfindungsgemäße Verfahren unterstützt werden, indem z. B. die inneren Räder der Kurvenfahrt durch die Parkbremseinrichtung abgebremst werden.

Insbesondere bei Fahrzeugen mit mehreren Bremspedalen, mit denen jeweils ein Rad des Fahrzeuges abbremsbar ist, kann der Betriebszustand auftreten, in dem der Fahrer vergessen hat, vor der Straßenfahrt die beiden Bremspedale miteinander zu verbinden. Erfindungsgemäß kann nun im Rahmen des Verfahrens vorgesehen werden, dass bei einem Nutzfahrzeug mit mehreren Bremspedalen über die unabhängigen elektronischen Parkbremsen ein ungebremstes Rad abgebremst wird, wenn eine Straßenfahrt des Nutzfahrzeuges oder ein Überschreiten einer vorbestimmten Grenzgeschwindigkeit bei nicht miteinander gekoppeltem Bremspedalen erfasst wird. Dadurch kann eine einseitige Bremsung des Fahrzeuges und der gegebenenfalls daraus resultierende kritische Fahrzustand sicher vermieden werden.

Zusammenfassend kann mit dem erfindungsgemäßen Verfahren durch die Verwendung einer elektronischen Parkbremseinrichtung die Betriebsweise eines Fahrzeuges erweitert und komfortabler gestaltet werden. Insbesondere können dadurch Zusatzfunktionen im Betrieb des Fahrzeuges realisiert bzw. unterstützt werden.

## Patentansprüche

1. Verfahren zum Ansteuern zumindest einer elektronisch angesteuerten Parkbremseinrichtung bei einem Fahrzeug, insbesondere bei einem Nutzfahrzeug, wobei die Parkbremseinrichtung in Abhängigkeit von Motor- und/oder Getriebeparametern in vorbestimmten Betriebszuständen des Fahrzeuges unterstützend eingesetzt wird, **dadurch gekennzeichnet, dass** als Parkbremseinrichtung zumindest zwei elektronische Parkbremsen verwendet werden, die jeweils einem Fahrzeugrad zur Unterstützung der automatischen Lenkbremsung zugeordnet werden.

2. Verfahren nach Anspruch 1, **dadurch gekennzeichnet, dass** die automatische Lenkbremsung durch die Ansteuerung der unabhängigen elektronischen Parkbremsen unterstützt wird, wenn durch das Auswerten von Raddrehzahlunterschieden ein vorbestimmter Lenkeinschlag erfasst wird.

3. Verfahren nach Anspruch 1 oder 2, **dadurch gekennzeichnet, dass** bei einem Nutzfahrzeug mit mehreren Bremspedalen über die unabhängigen elektronischen Parkbremsen ein ungebremstes Rad abgebremst wird, wenn eine Straßenfahrt des Nutzfahrzeuges und/oder ein Überschreiten einer vorbestimmten Grenzgeschwindigkeit bei nicht miteinander gekoppelten Bremspedalen erfasst wird.

4. Verfahren nach einem der vorangehenden Ansprüche, **dadurch gekennzeichnet, dass** die Parkbremseinrichtung zum Vermeiden von Überlastungen in regelmäßigen Abständen oder bei Erreichen einer maximalen Bremsleistung gelüftet wird.

5. Verfahren nach einem der vorangehenden Ansprüche, **dadurch gekennzeichnet, dass** die Parkbremseinrichtung aktiviert wird, wenn bei einer Bergfahrt oder Talfahrt des Fahrzeuges in Abhängigkeit von Getriebeparameter ein Öffnen des Antriebsstranges erkannt wird.

6. Verfahren nach Anspruch 5, **dadurch gekennzeichnet, dass** die Ansteuerung der Parkbremseinrichtung in Abhängigkeit einer vorbestimmten Rampenfunktion durchgeführt wird.

7. Verfahren nach einem der vorangehenden Ansprüche, **dadurch gekennzeichnet, dass** durch die Parkbremseinrichtung ein Bremsvorgang bei dem Fahrzeug unterstützt wird, wenn ein vorbestimmter positiver Gradient im Verlauf der Betätigungsbewegung des Bremspedals und/oder im Bremsdruckverlauf erreicht wird.

8. Verfahren nach Anspruch 7, **dadurch gekennzeichnet, dass** die zusätzliche Bremswirkung der Bremseinrichtung in Abhängigkeit von Signalen der Radsensoren reduziert wird, um ein Blockieren der Räder zu verhindern.

9. Verfahren nach einem der vorangehenden Ansprüche, **dadurch gekennzeichnet, dass** die elektronische Parkbremseinrichtung im Schubbetrieb bei Überschreiten einer vorbestimmten Drehzahlgrenze aktiviert wird.

10. Verfahren nach einem der vorangehenden Ansprüche, **dadurch gekennzeichnet, dass** durch die Aktivierung der Parkbremseinrichtung im Schubbetrieb bei einer Talfahrt eine Tempomat-Geschwindigkeit eingehalten wird.

11. Verfahren nach einem der vorangehenden Ansprüche, **dadurch gekennzeichnet, dass** bei hydrostatischen Getrieben, insbesondere bei hydrostatischen leistungsverzweigten CVT-Getrieben bei Erreichen eines vorbestimmten Druckniveaus die Parkbremseinrichtung aktiviert wird.

12. Verfahren nach einem der vorangehenden Ansprüche, **dadurch gekennzeichnet, dass** durch die Aktivierung der Parkbremseinrichtung die Charakteristik des Ausrollens des Fahrzeuges verändert wird.

## Claims

1. Method for controlling at least one electronically controlled parking brake device in a vehicle, in particular in a utility vehicle, wherein the parking brake device is used in assisting fashion as a function of the engine parameters and/or gearbox parameters in predetermined operating states of the vehicle, **characterized in that** at least two electronic parking brakes, which are each assigned to a vehicle wheel for assisting the automatic steering braking, are used as the parking brake device.

2. Method according to Claim 1, **characterized in that** the automatic steering braking is assisted by the actuation of the independent electronic parking brakes if a predetermined steering lock is detected by the evaluation of wheel rotational speed differences.

3. Method according to Claim 1 or 2, **characterized in that** in the case of a utility vehicle with a plurality of brake pedals, an unbraked wheel is braked by means of the independent electronic parking brakes if a road journey of the utility vehicle and/or a transgression of a predetermined limiting speed are/is detected when the brake pedals are not coupled to one another.

4. Method according to one of the preceding claims, **characterized in that** the parking brake device is ventilated at regular intervals or when a maximum braking power is reached, in order to avoid overloading.

5. Method according to one of the preceding claims, **characterized in that** the parking brake device is activated when an opening of the drive train is detected during uphill travel or downhill travel of the vehicle, as a function of gearbox parameters.

6. Method according to Claim 5, **characterized in that** the parking brake device is controlled as a function of a predetermined ramp function.

7. Method according to one of the preceding claims, **characterized in that** the parking brake device assists a braking process in the vehicle if a predetermined positive gradient is reached in the course of the activation movement of the brake pedal and/or in the brake pressure profile.

8. Method according to Claim 7, **characterized in that** the additional braking effect of the brake device is reduced as a function of signals of the wheel sensors in order to prevent locking of the wheels.

9. Method according to one of the preceding claims, **characterized in that** the electronic parking brake device is activated in the overrun mode when a predetermined rotational speed limit is exceeded.

10. Method according to one of the preceding claims, **characterized in that** a cruise controller speed is maintained in the overrun mode during downhill travel by activating the parking brake device.

11. Method according to one of the preceding claims, **characterized in that** in the case of hydrostatic transmissions, in particular in the case of hydrostatic power-split CVT transmissions, the parking brake device is activated when a predetermined pressure level is reached.

12. Method according to one of the preceding claims, **characterized in that** the characteristic curve of the coasting of the vehicle is changed by activating the parking brake device.

## Revendications

1. Procédé pour commander au moins un dispositif de frein de stationnement à commande électronique dans un véhicule, en particulier dans un véhicule utilitaire, le dispositif de frein de stationnement étant utilisé avec une fonction de support en fonction de paramètres du moteur et/ou de la transmission dans des états prédéterminés de fonctionnement du véhicule, **caractérisé en ce que** l'on utilise en tant que dispositif de frein de stationnement au moins deux freins de stationnement électroniques qui sont chacun associés à une roue du véhicule pour supporter le freinage automatique de la direction.

2. Procédé selon la revendication 1, **caractérisé en ce que** le freinage automatique de la direction est supporté par la commande des freins de stationnement électroniques indépendants, lorsque l'on détecte un braquage de direction prédéterminé par une analyse des différences de vitesse de rotation des roues.

3. Procédé selon la revendication 1 ou 2, **caractérisé en ce que** dans le cas d'un véhicule utilitaire avec plusieurs pédales de frein, une roue non freinée est freinée par le biais des freins de stationnement électroniques indépendants, lorsqu'une conduite sur route du véhicule utilitaire et/ou un dépassement d'une vitesse limite prédéterminée sont détectés alors que les pédales de frein ne sont pas accouplées l'une à l'autre.

4. Procédé selon l'une quelconque des revendications précédentes, **caractérisé en ce que** le dispositif de frein de stationnement est ventilé pour éviter les surcharges à intervalles réguliers ou lors de l'obtention d'une puissance de freinage maximale.

5. Procédé selon l'une quelconque des revendications précédentes, **caractérisé en ce que** le dispositif de frein de stationnement est activé lorsque, en cas de conduite en montée ou en descente du véhicule, une ouverture de la chaîne cinématique est détectée en fonction de paramètres de la transmission.

6. Procédé selon la revendication 5, **caractérisé en ce que** la commande du dispositif de frein de stationnement est effectuée en fonction d'une fonction de rampe prédéterminée.

7. Procédé selon l'une quelconque des revendications précédentes, **caractérisé en ce qu'**une opération de freinage du véhicule est assistée par le dispositif de frein de stationnement lorsqu'un gradient positif prédéterminé est atteint au cours du mouvement d'actionnement de la pédale de frein et/ou dans la courbe de pression des freins.

8. Procédé selon la revendication 7, **caractérisé en ce que** l'effet de freinage supplémentaire du dispositif de frein est réduit en fonction de signaux des capteurs de roue afin d'empêcher un blocage des roues.

9. Procédé selon l'une quelconque des revendications précédentes, **caractérisé en ce que** le dispositif de frein de stationnement électronique est activé en mode de poussée en cas de dépassement d'une limite de vitesse de rotation prédéfinie.

10. Procédé selon l'une quelconque des revendications précédentes, **caractérisé en ce qu'**une vitesse de croisière est respectée par l'activation du dispositif de frein de stationnement en mode de poussée en cas de conduite en descente.

11. Procédé selon l'une quelconque des revendications précédentes, **caractérisé en ce que** le dispositif de frein de stationnement est activé pour des transmissions hydrostatiques, en particulier pour des transmissions à variation continue hydrostatiques à puissance partagée lors de l'obtention d'un niveau de pression prédéterminé du dispositif de frein de stationnement.

12. Procédé selon l'une quelconque des revendications précédentes, **caractérisé en ce que** la caractéristique de marche en roue libre du véhicule est modifiée par l'activation du dispositif de frein de stationnement.
